# EUROPÄISCHE PATENTSCHRIFT

(11) **EP 0 875 488 B1**
(45) Veröffentlichungstag und Bekanntmachung des Hinweises auf die Patenterteilung: **10.10.2001**
(21) Anmeldenummer: 98107412.3
(22) Anmeldetag: 23.04.1998
(51) Int. Cl.: C01B 31/30, C01B 31/34, C01B 21/082, C22C 29/00, B01J 27/22, B01J 27/24

(54) **Verfahren zur Herstellung von Übergangsmetallcarbiden und/oder Übergangsmetallcarbonitriden und deren Verwendung sowie neue Übergangsmetall-Xerogele**
Method to produce transition metal carbides and/or carbonitrides, their use and transition metal xerogels
Procédé de préparation de carbures et/ou de carbonitrures de métaux de transition, leur utilisation et xérogels de métaux de transition

(30) Priorität: 02.05.1997 DE 19718525
(43) Veröffentlichungstag der Anmeldung: 04.11.1998
(73) Patentinhaber: BAYER AG, 51368 Leverkusen (DE)
(72) Erfinder: Womelsdorf, Hermann-Jens, Dr., 51375 Leverkusen (DE); Passing, Gerd, Dr., 50937 Köln (DE); Perchenek, Nils, Dr., 51373 Leverkusen (DE)

(56) Entgegenhaltungen:
- EP-A- 0 042 660
- EP-A- 0 239 301
- WO-A-89/05776
- PREISS H ET AL: "PREPARATION OF MOLYBDENUM AND TUNGSTEN CARBIDES FROM SOLUTION DERIVED PRECURSORS" JOURNAL OF MATERIALS SCIENCE, Bd. 33, Nr. 3, 1. Februar 1998, Seiten 713-722, XP000733021
- DATABASE WPI Section Ch, Week 8210 Derwent Publications Ltd., London, GB; Class E37, AN 82-18540E XP002074463 & JP 57 017 412 A (UBE IND LTD)
- PATENT ABSTRACTS OF JAPAN vol. 006, no. 035 (C-093), 3. März 1982 & JP 56 155013 A (UBE IND LTD), 1. Dezember 1981 & JP 56 155 013 A
- CHEMICAL ABSTRACTS, vol. 115, no. 12, 23. September 1991 Columbus, Ohio, US; abstract no. 118885, KURODA KAZUYUKI ET AL.: "Synthesis of precursors for ceramics and their nitrides and carbides formation" XP002074481 & KENKYU HOKOKU-ASAHI GARASU ZAIDAN, Nr. 57, 1990, Seiten 347-354,

## Beschreibung

Die vorliegende Erfindung betrifft ein Verfahren zur Herstellung von Übergangsmetall-carbiden und/oder Übergangsmetallcarbonitriden und deren Verwendung sowie neue Übergangsmetall-Xerogele.

Übergangsmetallcarbide haben aufgrund ihrer hohen Härte eine große Bedeutung für die Hartmetallindustrie. Sie werden insbesondere für die Herstellung von Schneidwerkzeugen verwendet. Dabei erhöhen sich Härte und Abriebfestigkeit mit abnehmender Korngröße der Carbide. Daher ist die Herstellung besonders feinteiliger Carbide, insbesondere solcher mit Korngrößen unterhalb 1 µm, von großem Interesse.

Bekannt ist die Herstellung von Übergangsmetallcarbiden aus ihren Oxiden durch Festphasencarburierung mit Graphit bei Temperaturen zwischen 1400 und 2000°C. Sub-µ Carbide sind auf diese Weise nur durch aufwendige Mahlungen der Produkte oder durch Einsatz teurer, extrem feinteiliger Edukte erhältlich.

WC-Pulver mit mittleren Teilchengrößen unterhalb ungefähr 0,5 µm sind auf diese Weise nicht darstellbar, entsprechend wurden in letzter Zeit einige neue Darstellungsmethoden entwickelt.

In DE -A 4214725 wird ein Gasphasenverfahren beschrieben, mit dem extrem feinteilige Partikel für Nichtoxidkeramiken hergestellt werden können. Dieses Verfahren ist jedoch apparativ sehr aufwendig, ebenso wie das in WO 91/07244 beschriebene Verfahren zur Herstellung von WC/Co-Compositen durch Sprühtrocknung cogefällter W/Co-Salze und nachfolgender Reduktion zu den Metallpulvern mit nachgeschalteter Aufcarburierung zur carbidischen Mischphase WC-Co.

In US-A 5372797 wird die Carburierung von Wolframtrioxid in einer Reaktivgasatmosphäre aus Wasserstoff und Methan beschrieben.

In EP-A 0239301 wird die Herstellung von Carbidprecursoren der 4. bis 6. Nebengruppe durch Transesterifikation der Metallalkoxide mit Polyolen und nachfolgender Precursorpyrolyse zu den gewünschten Carbiden beschrieben.

In JP-A 56-155013 wird ein ähnliches Verfahren beschrieben mit dem Unterschied, daß die Metalle nicht nur als Alkoxide, sondern auch in Form ihrer Halogenide und Oxihalogenide eingesetzt werden können.

Nachteilig an den bekannten Lösungen ist:
Die klassische Methode der Festphasencarburierung von Metallen oder Metalloxiden mit Graphitpulver benötigt in der Regel Temperaturen oberhalb 1400°C und ergibt Produkte mit mittleren Partikelgrößen oberhalb 1µm, die unter einem entsprechend hohen Aufwand für Mahlen und Klassierung aufgearbeitet werden müssen. Zudem verschlechtern aufwendige Mahlungen im allgemeinen die Pulvereigenschaften.

Die Carburierung in einer Reaktivgasatmosphäre ergibt in der Regel unterstöchiometrische Produkte.

Precursoren aus Alkoxiden sind für Hartmetallpulver zu teuer, da die benötigten Alkoxide nicht in großen Mengen am Markt verfügbar sind und ihre Herstellung aufwendig ist. Halogenide enthaltende Precursoren sind aus Umweltaspekten weniger geeignet.

Aufgabe der Erfindung war es daher, ein einfaches Verfahren bereitzustellen, das geeignet ist, sub-µ Carbide und -carbonitride der 5. und 6. Nebengruppe mit mittleren Teilchengrößen kleiner 0,5 µm aus kommerziell verfügbaren, kostengünstigen Edukten großtechnisch und preiswert herzustellen und damit den steigenden Anforderungen an die Feinteiligkeit gerecht zu werden.

Es wurde gefunden, daß man Übergangsmetallcarbide und/oder -carbonitride der 5. und 6. Nebengruppe mit einem mittleren Teilchendurchmesser < 0,5 µm herstellen kann, wenn mindestens eine oxidische Übergangsmetallverbindung mit mindestens einer mindestens zwei OH-Gruppen aufweisenden organischen Verbindung umgesetzt wird, anschließend überschüssige Anteile der organischen Verbindung abgezogen und das so erhaltene Produkt in einer Inertgasatmosphäre und/oder Vakuum, oder, um Carbonitride zu erhalten, unter stickstoffhaltiger Atmosphäre pyrolysiert wird.

Gegenstand der Erfindung ist daher ein Verfahren zur Herstellung von Übergangsmetallcarbiden und/oder -carbonitriden der 5. und 6. Nebengruppe mit einem mittleren Teilchendurchmesser < 0,5 µm, wonach man mindestens eine oxidische Übergangsmetallverbindung in mindestens einer mindestens zwei OH-Gruppen aufweisenden organischen Verbindung, vorzugsweise bei Temperaturen zwischen Raumtemperatur und der Siedetemperatur des Gemisches, d.h. vorzugsweise zwischen 20 und 300°C, umsetzt, anschließend überschüssige Anteile der organischen Verbindung abzieht und das so erhaltene Produkt vorzugsweise bei Temperturen zwischen 300°C und der Sintertemperatur, d.h. zwischen 300 und 4000°C, vorzugsweise zwischen 600°C und 2000°C, besonders bevorzugt zwischen 900°C und 1300°C des jeweiligen Carbids in einer Inertgasatmosphäre und/oder Vakuum, oder, um Carbonitride zu erhalten, unter Stickstoffatmosphäre pyrolysiert.

Der Druck in der Inertgas- oder Stickstoffatmosphäre beträgt 100 mbar bis 5 bar, besonders bevorzugt 500 mbar bis 1,2 bar.

Unter Vakuum wird hierbei vorzugsweise ein Druckbereich von 100 bis 0,01 mbar, bevorzugt 30 bis 0,1 mbar verstanden.

In einer bevorzugten Ausführungsform der Erfindung beträgt der Druck während der Pyrolyse zwischen 0,01 mbar und 5 bar, bevorzugt 0,1 mbar und 1,2 bar.

Bei den nach dem erfindungsgemäßen Verfahren hergestellten Übergangsmetallcarbiden und/oder -carbonitriden der 5. und 6. Nebengruppe handelt es sich vorzugsweise um Vanadium-, Molybdän und/oder Wolframcarbid und/oder Vanadiumcarbonitrid.

Unter den Begriff Carbide fallen dabei sowohl die stöchimetrischen Verbindungen, wie z.B. WC, W₂C, Mo₂C als auch die Verbindungen in ihrem jeweiligen Homogenitätsbereich. Unter Homogenitätsbereich der jeweiligen Verbindung ist der Bereich im zugehörigen Phasendiagramm zu verstehen, in dem die Verbindung als einzige Phase vorliegt.

Der mittlere Teilchendurchmesser < 0,5 µm wurde dabei durch Auswertung von TEM-Aufnahmen ermittelt. Dabei handelt es sich um das Zahlenmittel.

Bei der in dem erfindungsgemäßen Verfahren eingesetzten oxidischen Übergangsmetallverbindung handelt es sich vorzugsweise um eine anorganische Polysäure oder ein anorganisches Oxid.

Die als Polysäure bezeichneten Metallverbindungen der 5. und 6. Nebengruppe können z.B. Iso- oder Heteropolysäuren sein (siehe z.B. Römpp 9. Auflage, Georg Thieme Verlag pp. 1789 u. 2073). Bevorzugt werden Isopolysäuren eingesetzt, besonders bevorzugt ihre Ammoniumsalze, ganz besonders bevorzugt Ammoniummetavanadat, Ammoniumheptamolybdat und Ammoniumparawolframat.

In einer bevorzugten Ausführungsform der Erfindung werden als oxidische Übergangsmetallverbindungen Gemische aus Polysäuren verschiedener Metalle eingesetzt, wie z.B. ein Gemisch aus Ammoniummetavanadat und Ammoniumparawolframat.

Bei den in dem erfindungsgemäßen Verfahren eingesetzten mindestens zwei OH-Gruppen aufweisenden organischen Verbindungen handelt es sich vorzugsweise um Verbindungen, die 2 ≤ n ≤ 10 OH-Gruppen aufweisen.

Als OH-Gruppen enthaltende Verbindungen werden bevorzugt zwei- oder dreiwertige Alkohole wie z.B. Ethylenglykol, Propandiol, Butandiol, Glycerin oder auch Abmischungen aus diesen und Verbindungen mit mehr als zwei OH-Gruppen wie z.B. Pentaerythrit, Zuckeralkohole wie Sorbitol oder Mannitol, Saccharose etc. eingesetzt. Als besonders bevorzugt seien genannt: Abmischungen aus einem zweiwertigen Alkohol und einem Zucker oder Zuckeralkohol, ganz besonders bevorzugt sind solche aus Ethylenglykol und Sorbitol.

In einer weiteren Ausführungsform des erfindungsgemäßen Verfahrens erfolgt die Umsetzung vorzugsweise in einem Lösemittel. Als Lösemittel können dabei neben den mindestens 2 OH-Gruppen aufweisenden organischen Verbindungen auch z.B. Wasser oder Natronlauge fungieren. Vorzugsweise wird jedoch die OH-Gruppen aufweisende organische Verbindung als Lösemittel eingesetzt, die auch als Reaktionspartner fungiert.

In einer weiteren Ausführungsform wird die oxidische Übergangsmetallverbindung zunächst in einer zwei OH-Gruppen aufweisenden organischen Verbindung, vorzugsweise einem Diol, gelöst und umgesetzt, das Lösemittel abgezogen und der Rückstand durch Waschen oder Umkristallisieren gereinigt. Das so erhaltene Pulver wird dann erneut in einem geeigneten Lösemittel gelöst und mit einer mehr als zwei OH-Gruppen enthaltenden organischen Verbindung umgesetzt. Das Produkt dieser Umsetzung wird getrocknet und dann pyrolysiert.

Für den Fall, daß in dem erfindungsgemäßen Verfahren nur eine mindestens zwei OH-Gruppen aufweisende organische Verbindung eingesetzt wird, wird diese daher vorzugsweise in einer solchen Menge zugefügt, daß sich die oxidische Übergangsmetallverbindung darin löst.

Für den Fall, daß in dem erfindungsgemäßen Verfahren eine Mischung aus mindestens einer mindestens zwei OH-Gruppen aufweisenden organischen Verbindung und mindestens einer mehr als zwei OH-Gruppen aufweisenden organischen Verbindung eingesetzt wird, wird vorzugsweise die OH-funktionelle Verbindung zum Lösen der oxidischen Übergangsmetallverbindung eingesetzt, die den geringsten Anteil an OH-Gruppen aufweist. Die weitere OH-Gruppen aufweisende organische Verbindung wird in einem molaren Verhältnis von 0,02-1 : 2, bezogen auf den Metallgehalt der oxidischen Übergangsmetallverbindung eingesetzt.

In einer bevorzugten Ausführungsform der Erfindung liegt die Temperatur beim Umsetzen und auch beim Lösen 1 bis 20°C unterhalb der Siedetemperatur der eingesetzten organischen hydroxylgruppenhaltigen Verbindung oder der Mischung.

In einer bevorzugten Ausführungsform wird das Precursormaterial vor der Pyrolyse zunächst bei einer Temperatur zwischen 100 und 200°C im Vakuum über 1-3 Stunden getempert.

Die Pyrolyse wird vorzugsweise mindestens zweistufig durchgeführt, d.h. in einer Niedertemperaturstufe bis zu einer Temperatur zwischen 200 und 300°C und in einer Hochtemperaturstufe bis zur Endtemperatur, die unterhalb der Sintertemperatur liegt, bevorzugt bis 2000°C, besonders bevorzugt bis auf eine Temperatur zwischen 900°C und 1300°C. Die Pyrolyse kann unter Inertgas und/oder Vakuum oder, zur Herstellung der Carbonitride, ganz oder teilweise unter Stickstoffatmosphäre erfolgen.

Bei einer Durchführung der Pyrolyse in mehr als einem Pyrolyseschritt ist es bevorzugt, zwischen zwei Pyrolyseschritten die Mischung mindestens einmal zu zerkleinern und/oder zu mahlen. Für das Zerkleinern und Mahlen sind Schlag-, Schneid-, Fließbettgegenstrahl- und Perlmühlen bevorzugt.

In einer weiteren bevorzugten Ausführungsform der Erfindung wird im Anschluß an die Umsetzung eine thermische Nachbehandlung unter Wasserstoffatmosphäre oder einem Wasserstoff/Inertgasgemisch bei Temperaturen 600°C < T < der Sintertemperatur, vorzugsweise unterhalb 1500°C durchgeführt.

Obgleich diese Erfindung nicht auf ein einzelnes System beschränkt ist, soll im folgenden vor allem die Darstellung von WC exemplifiziert werden, um die wesentlichen Merkmale der Erfindung darzustellen.

Das erfindungsgemäße Verfahren wird im allgemeinen wie folgt durchgeführt: Die Übergangsmetallverbindung wird zunächst in einem Gemisch der OH-Komponenten bei erhöhter Temperatur gelöst. In einer bevorzugten Ausführungsform wird Ammoniumparawolframat in einem Gemisch aus Ethylenglykol und Sorbitol bei Temperaturen knapp unterhalb des Siedepunktes des Ethylenglykols gelöst und umgesetzt. Alternativ kann die Umsetzung auch in anderen Gemischen durchgeführt weden, wie z.B. in 1,2 Propandiol und Sorbitol. Das molare Verhältnis Wolfram : Sorbitol beträgt dabei zwischen 0 und 2, in einer besonders bevorzugten Ausführungsform zwischen 0,1 und 1 und in einer ganz besonders bevorzugten Ausführungsform 0,4 bis 0,7. Dann wird überschüssiges Lösemittel abdestilliert, so daß ein polymerer Precursor entsteht, in dem das Übergangsmetall homogen molekular verteilt ist. Der Vernetzungsgrad dieses polymeren Precursors wird sowohl durch das Verhältnis der OH-Verbindungen untereinander und zur eingesetzten Übergangsmetallverbindung als auch über die Temperzeit unter Vakuum unterhalb der Zersetzungstemperatur erhöht. Der Precursor wird unter Inertgasatmosphäre zu dem gewünschten Carbid pyrolysiert. In einer bevorzugten Ausführungsform wird die Pyrolyse mehrstufig durchgeführt. Zunächst wird der Precursor unter Schutzgas bis ca. 300°C, dann unter Vakuum bis ca. 1000°C erhitzt. Dabei treten Zersetzungsreaktionen auf, bei denen ein erheblicher Teil des organischen Materials mit dem Inertgasstrom und im Vakuum abgeführt wird. Das Übergangsmetall wird über intermediäre oxidische Stufen zum Metall reduziert, welches fein verteilt neben Kohlenstoff vorliegt und in einer zweiten Pyrolysestufe in einem Hochtemperaturofen, bevorzugt in einem Graphittiegel bei Temperaturen zwischen 1100°C und 1400°C zum Carbid umgesetzt wird. In einer besonders bevorzugten Ausführungsform wird ein amorphes Zwischenprodukt zerkleinert und/oder gemahlen.

Die Herstellung eines Carbonitrids, z.B. des Vanadiumcarbonitrids, kann analog erfolgen, mit dem Unterschied, daß die Pyrolyse zweckmäßig unter stickstoffhaltiger Atmosphäre erfolgt.

Gegenstand der Erfindung sind zudem Übergangsmetall-Xerogele, erhältlich durch die Umsetzung von mindestens einer oxidischen Übergangsmetallverbindung mit mindestens einer mindestens zwei OH-Gruppen aufweisenden organischen Verbindung bei Temperaturen zwischen Raumtemperatur und der Siedetemperatur des Gemisches, d.h. vorzugsweise zwischen 20 und 300°C, und anschließendem Abziehen der überschüssigen Anteile der organischen Verbindung .

Ein weiterer Gegenstand der Erfindung ist die Verwendung der nach dem erfindungsgemäßen Verfahren hergestellten Übergangsmetallcarbide als Pulver für die Hartmetallindustrie oder als Katalysatoren, z.B. als Ersatz für Platinmetalle, wie z.B. für Dehydrierungsreaktionen.

Die Erfindung wird anhand der folgenden Beispiele weiter erläutert, ohne dabei auf diese Beispiele beschränkt zu sein.

### Ausführungsbeispiele

### Beispiel 1:

### Herstellung eines W-Xerogels

125 g Ammoniumparawolframat, 275 g Ethylenglykol und 39 g Sorbitol wurden in einem Argon-gespülten 2l-Dreihalskolben bis 190°C erhitzt, bis eine homogene, hellbraune Lösung entstanden war. Niedersiedende Reaktionsprodukte wurden kontinuierlich abgeschieden. Danach wurde überschüssiges Ethylenglykol zunächst unter Normaldruck, dann bis 160°C Sumpftemperatur im Vakuum bis 0,05 mbar abdestilliert. Es blieben 175 g einer festen, schaumigen Masse zurück.

### Beispiel 2:

### Herstellung von Wolframcarbid

20 g des Materials aus Beispiel 1 wurden sechs Stunden lang bei 1100°C im Stickstoffstrom in einem Aluminiumoxidschiffchen in einem Rohrofen pyrolysiert. Es wurden 9,7 g Zwischenprodukt erhalten. 4 g dieses Materials wurden in einer zweiten Pyrolysestufe bis 1200°C mit einer Stunde Haltezeit in einem Graphittiegelofen unter leichtem Stickstoffüberdruck (ca. 0,1 bar) zuende umgesetzt. Es wurden 3,9 g schwarz-graues Pulver erhalten.

Das Produkt enthielt nach röntgendiffraktometrischer Analyse ausschließlich WC. Elementaranalysen mit einem CS-MAT und einem ON-MAT (beide Geräte der Firma Ströhlein, Deutschland) ergaben einen C-Gehalt von 6,07 % und einen O-Gehalt von 0,21 %. Transmissionselektronenmikroskopische Aufnahmen eines in einem Borcarbidmörser mit der Hand aufgemahlenen Pulvers zeigten Primärteilchen mit einem Durchmesser zwischen ca. 30 und 150 nm. Die Abschätzung der Kristallitgröße aus den Halbwertsbreiten der stärksten Peaks der röntgendiffraktometrischen Messung ergab eine Kristallitgröße von 33 nm.

### Beispiel 3:

### Herstellung eines W-Xerogels

750 g Ammoniumparawolframat, 1650 g Ethylenglykol und 312,2 g Sorbitol wurden nach dem in Beispiel 1 angegebenen Verfahren zu 1093 g Precursormaterial umgesetzt.

### Beispiel 4:

### Herstellung von Wolframcarbid

750g des in Beispiel 3 hergestellten Precursormaterials wurden in einem Quarzschiffchen in einem evakuierbaren Ofen bis 1100°C mit einer Stunde Haltezeit pyrolysiert. Dabei wurde bis 300°C unter Stickstoffstrom gearbeitet, danach unter Vakuum 1 mbar ≤ p ≤ 100 mbar. Während der Abkühlphase wurde ab 960°C mit Stickstoff geflutet. Es wurden 371 g Produkt erhalten und in einem Graphittiegelofen unter leichtem Stickstoffüberdruck (0,1 bar) Stickstoff bis 1200°C mit einer Stunde weiter pyrolysiert. Es wurden 366 g eines grau-schwarzen Pulvers erhalten.

Das Produkt enthielt nach röntgendiffraktometrischer Analyse ausschließlich WC. Elementaranalysen mit einem CS-MAT und einem ON-MAT (beide Geräte der Firma Ströhlein, Deutschland) ergaben einen C-Gehalt von 6,12 % und einen O-Gehalt von 0,16 %. Transmissionselektronenmikroskopische Aufnahmen eines in einem Borcarbidmörser mit der Hand aufgemahlenen Pulvers zeigten Primärteilchen mit einem Durchmesser zwischen ca. 20 und 100 nm. Die Abschätzung der Kristallitgröße aus den Halbwertsbreiten der stärksten Peaks der röntgendiffraktometrischen Messung ergab eine Kristallitgröße von 27 nm. Die spezifische Oberfläche des Materials wurde durch Stickstoffadsorption nach der BET-Methode (DIN 66131) zu 8,6 m²/g bestimmt.

### Beispiel 5:

### Herstellung von Wolframcarbid wie in Beispiel 4, jedoch mit Mahlung des Endproduktes

595 g eines nach Beispiel 3 hergestellten Precursormaterials wurden wie unter Beispiel 4 umgesetzt. Das erhaltene Wolframcarbid wurde in einer Perlmühle ( der Firma Netzsch Feinmahltechnik GmbH, Deutschland) naß in n-Hexan gemahlen. Das getrocknete Pulver wurde bei 1200°C bei 2 Stunden Haltezeit thermisch nachbehandelt. Es wurden 263 g Produkt erhalten.

Das Produkt enthielt nach röntgendiffraktometrischer Analyse ausschließlich WC. Elementaranalysen mit einem CS-MAT und einem ON-MAT (beide Geräte der Firma Ströhlein, Deutschland) ergaben einen C-Gehalt von 6,13 % und einen O-Gehalt von 0,25 %. Transmissionselektronenmikroskopische Aufnahmen zeigten Primärteilchen mit einem Durchmesser zwischen ca. 30 und 150 nm. Die Abschätzung der Kristallitgröße aus den Halbwertsbreiten der stärksten Peaks der röntgendiffraktometrischen Messung ergab eine Kristallitgröße von 25 nm.

### Beispiel 6:

### Herstellung von Wolframcarbid

100 g Ammoniumparawolframat und 500 g Ethylenglykol wurden in einem Argon-gespülten 2 1-Dreihalskolben bis 190°C erhitzt, bis eine homogene hellbraune Lösung entstanden war. Niedersiedende Reaktionsprodukte wurden kontinuierlich abdestilliert. Danach wurde überschüssiges Ethylenglykol bei 120°C unter Vakuum abdestilliert. Es blieb ein weißlicher Feststoff zurück, der durch Umkristallisieren in Methanol gereinigt wurde. Das gereinigte Pulver wurde in heißem Methanol gelöst und mit 34,7 g ebenfalls in heißem Methanol gelöstem Sorbitol umgesetzt. Nach Trocknen wurden 65 g eines weißen Pulvers erhalten. 10 g dieses Pulvers wurden zunächst in einem Aluminiumoxidschiffchen im Stickstoffstrom bis 100°C, dann in einem Graphittiegel bis 1300°C pyrolysiert. Es wurden 4,6 g eines grau-schwarzen Pulvers erhalten. Das Produkt enthielt nach röntgendiffraktometrischer Analyse ausschließlich WC. Elementaranalysen mit einem CS-MAT und einem ON-MAT (beide Ströhlein Instruments) ergaben einen C-Gehalt von 6,17 % und einen O-Gehalt von 0,12 %.

### Beispiel 7:

### Herstellung von Vanadiumcarbid

20 g Ammoniummetavanadat, 350 g Ethylenglykol und 14 g Sorbitol wurden nach dem in Beispiel 1 angegebenen Verfahren zu 29,7 g Precursormaterial umgesetzt.

15 g dieses Materials wurden sechs Stunden lang bei 1100°C im Argonstrom in einem Aluminiumoxidschiffchen in einem Rohrofen pyrolysiert. Es wurden 3,9 g schwarz-graues Pulver erhalten.

Das Produkt enthielt nach röntgendiffraktometrischer Analyse ausschließlich Vanadiumcarbid. Elementaranalysen mit einem CS-MAT und einem ON-MAT (beide Geräte der Firma Ströhlein, Deutschland) ergaben einen C-Gehalt von 18,72 % und einen O-Gehalt von 0,47 %. Transmissionselektronenmikroskopische Aufnahmen eines in einem Borcarbidmörser mit der Hand aufgemahlenen Pulvers zeigten gut kristalline Primärteilchen mit einem Durchmesser zwischen ca 50 und 200 nm. Die Abschätzung der Kristallitgröße aus den Halbwertsbreiten der stärksten Peaks der röntgendiffraktometrischen Messung ergab eine Kristallitgröße von 89 nm.

## Patentansprüche

1. Verfahren zur Herstellung von Übergangsmetallcarbiden und/oder -carbonitriden der 5. und 6. Nebengruppe mit einem mittleren Teilchendurchmesser <0,5 µm, **dadurch gekennzeichnet, daß** man mindestens eine oxidische Übergangsmetallverbindung mit mindestens einer mindestens zwei OH-Gruppen aufweisenden organischen Verbindung umsetzt, anschließend überschüssige Anteile der organischen Verbindung abzieht und das so erhaltene Produkt in einer Inertgasatmosphäre und/oder Vakuum, oder, um Carbonitride zu erhalten, unter Stickstoffatmosphäre pyrolysiert.

2. Verfahren nach Anspruch 1, **dadurch gekennzeichnet, daß** als oxidische Übergangsmetallverbindung eine anorganische Polysäure oder ein Gemisch aus Polysäuren von Metallen der der 5. und 6. Nebengruppe eingesetzt wird.

3. Verfahren nach Anspruch 2, **dadurch gekennzeichnet, daß** als Polysäure ein Ammoniumwolframat, -vanadat und/oder -molybdat eingesetzt wird.

4. Verfahren nach einem oder mehreren der Ansprüche 1 bis 4, **dadurch gekennzeichnet, daß** als organische Verbindung eine Mischung aus einem 2 oder 3 OH-Gruppen enthaltenden Alkohol und einer mehr als 2 OH-Gruppen enthaltenden Verbindung eingesetzt wird.

5. Verfahren nach Anspruch 4, **dadurch gekennzeichnet, daß** diese Mischung aus Ethylenglykol und Sorbitol besteht.

6. Verfahren nach einem oder mehreren der Ansprüche 1 bis 5, **dadurch gekennzeichnet, daß** die Umsetzung in einem Lösemittel durchgeführt wird.

7. Verfahren nach Anspruch 6, **dadurch gekennzeichnet, daß** das Lösemittel eine mindestens 2 OH-Gruppen aufweisende organische Verbindung ist.

8. Verfahren nach einem oder mehreren der Ansprüche 1 bis 7, **dadurch gekennzeichnet, daß** die Temperatur beim Lösen und Umsetzen 1 bis 20°C unterhalb der Siedetemperatur der eingesetzten organischen OH-Gruppen aufweisenden Verbindung oder der Mischung liegt.

9. Verfahren nach einem oder mehreren der Ansprüche 1 bis 8, **dadurch gekennzeichnet, daß** die Pyrolyse mindestens zweistufig durchgeführt wird.

10. Verfahren nach einem oder mehreren der Ansprüche 1 bis 9, **dadurch gekennzeichnet, daß** im Anschluß an die Umsetzung eine thermische Nachbehandlung unter Wasserstoffatmosphäre oder einem Wasserstoff/Inertgasgemisch bei Temperaturen 600°C < T <1500°C durchgeführt wird.

11. Übergangsmetall-Xerogele, erhältlich durch die Umsetzung von mindestens einer oxidischen Übergangsmetallverbindung mit mindestens einer mindestens zwei OH-Gruppen aufweisenden organischen Verbindung bei Temperaturen zwischen Raumtemperatur und der Siedetemperatur des Gemisches und anschließendem Abziehen der überschüssigen Anteile der organischen Verbindung.

12. Verwendung der nach den Verfahren nach einem oder mehreren der Ansprüche 1 bis 10 hergestellten Übergangsmetallcarbiden oder -carbonitride als Pulver für die Hartmetallindustrie oder als Katalysatoren.

## Claims

1. Process for preparing transition metal carbides and/or transition metal carbonitrides of transition groups 5 and 6 having a mean particle diameter of < 0.5 *µ*m, **characterized in that** at least one oxidic transition metal compound is reacted with at least one organic compound having at least two OH groups, excess organic compound is subsequently taken off and the product obtained in this way is pyrolysed in an inert gas atmosphere and/or under reduced pressure or, to obtain carbonitrides, in a nitrogen atmosphere.

2. Process according to Claim 1, **characterized in that** an inorganic polyacid or a mixture of polyacids of metals of transition groups 5 and 6 is used as oxidic transition metal compound.

3. Process according to Claim 2, **characterized in that** an ammonium tungstate, ammonium vanadate and/or ammonium molybdate is used as polyacid.

4. Process according to one or more of Claims 1 to 4, **characterized in that** a mixture of an alcohol containing two or three OH groups and a compound containing more than two OH groups is used as organic compound.

5. Process according to Claim 4, **characterized in that** this mixture consists of ethylene glycol and sorbitol.

6. Process according to one or more of Claims 1 to 5, **characterized in that** the reaction is carried out in a solvent.

7. Process according to Claim 6, **characterized in that** the solvent is an organic compound having at least two OH groups.

8. Process according to one or more of Claims 1 to 7, **characterized in that** the temperature during the dissolution and reaction is from 1 to 20°C below the boiling point of the organic OH-containing compound or mixture used.

9. Process according to one or more of Claims 1 to 8, **characterized in that** the pyrolysis is carried out in at least two stages.

10. Process according to one or more of Claims 1 to 9, **characterized in that** the reaction is followed by a thermal after-treatment carried out at temperatures such that 600°C < T < 1500°C in a hydrogen atmosphere or a hydrogen/inert gas mixture.

11. Transition metal xerogels obtainable by reacting at least one oxidic transition metal compound with at least one organic compound having at least two OH groups at temperatures in the range from room temperature to the boiling point of the mixture and subsequently taking off the excess organic compound.

12. Use of transition metal carbides or transition metal carbonitrides prepared by the process according to one or more of Claims 1 to 10 as powders for the cemented carbide industry or as catalysts.

## Revendications

1. Procédé pour la préparation de carbures et/ou carbonitrures de métaux de transition du cinquième et du sixième sous-groupe à un diamètre de particule moyen inférieur à 0,5 µm, **caractérisé en ce que** l'on fait réagir au moins un dérivé de métal de transition du type oxyde avec au moins un composé organique à au moins deux groupes OH, on élimine ensuite l'excès du composé organique et on pyrolyse le produit obtenu en atmosphère de gaz inerte et/ou sous vide ou bien, lorsqu'on recherche des carbonitrures, en atmosphère d'azote.

2. Procédé selon la revendication 1, **caractérisé en ce que** l'on met en oeuvre en tant que dérivé de métal de transition du type oxyde un polyacide minéral ou un mélange de polyacides des métaux du cinquième et du sixième sous-groupe.

3. Procédé selon la revendication 2, **caractérisé en ce que** l'on met en oeuvre en tant que polyacides un tungstate, un vanadate et/ou un molybdate d'ammonium.

4. Procédé selon une ou plusieurs des revendications 1 à 3, **caractérisé en ce que** l'on met en oeuvre en tant que composé organique un mélange d'un alcool contenant deux ou trois groupes OH et d'un composé contenant plus de deux groupes OH.

5. Procédé selon la revendication 4, **caractérisé en ce que** le mélange en question consiste en éthylèneglycol et sorbitol.

6. Procédé selon une ou plusieurs des revendications 1 à 5, **caractérisé en ce que** la réaction est réalisée dans un solvant.

7. Procédé selon la revendication 6, **caractérisé en ce que** le solvant utilisé est un composé organique à au moins deux groupes OH.

8. Procédé selon une ou plusieurs des revendications 1 à 7, **caractérisé en ce que** la température à la dissolution et à la réaction se situe dans l'intervalle de 1 à 20°C au-dessous de la température d'ébullition du composé ou mélange de composés organiques à groupes OH mis en oeuvre.

9. Procédé selon une ou plusieurs des revendications 1 à 8, **caractérisé en ce que** la pyrolyse est réalisée en au moins deux stades.

10. Procédé selon une ou plusieurs des revendications 1 à 9, **caractérisé en ce que**, après la réaction, on procède à un traitement complémentaire thermique en atmosphère d'hydrogène ou dans un mélange hydrogène/gaz inerte à des températures de 600°C < T < 1500°C.

11. Xérogels de métaux de transition obtenus par réaction d'au moins un dérivé de métal de transition du type oxyde avec au moins un composé organique à au moins deux groupes OH à des températures comprises entre la température ambiante et la température d'ébullition du mélange, suivie de l'élimination de l'excès du composé organique.

12. Utilisation des carbures ou carbonitrures de métaux de transition préparés par les procédés selon une ou plusieurs des revendications 1 à 10 à l'état de poudres pour l'industrie des carbures métalliques ou en tant que catalyseurs.
